# EUROPEAN PATENT SPECIFICATION

(11) **EP 2 285 615 B1**
(45) Date of publication and mention of the grant of the patent: **27.06.2012**
(21) Application number: 09739073.6
(22) Date of filing: 15.04.2009
(51) Int. Cl.: B60K 15/03, F02M 37/22

(54) **FUEL TANK**
KRAFTSTOFFBEHÄLTER
RÉSERVOIR DE CARBURANT

(30) Priority: 30.04.2008 SE 0800980
(43) Date of publication of application: 23.02.2011
(73) Proprietor: Scania CV AB, 151 87 Södertälje (SE)
(72) Inventor: NORDENHÖK, Robert, S-144 52 Rönninge (SE)
(86) International application number: PCT/SE2009/050387
(87) International publication number: WO 2009/134192

(56) References cited:
- JP-A- 2004 074 991
- US-A- 3 249 229
- US-A- 3 249 229
- US-A1- 2005 121 374
- US-A1- 2005 252 847

## Description

### Technical field

The present invention relates to a fuel tank according to the preamble of claim 1.

### Background

Vehicles are provided with one or more fuel tanks for storage of vehicle fuel. A commonly used vehicle fuel is diesel, which always contains a certain proportion of water which may have been added intentionally to the diesel or may, for example, have condensed in the fuel tank and thereby become mixed with the diesel in the tank. However, it is undesirable that water should enter the vehicle's engine.

Removal of water from diesel which has water mixed with it entails using filters which can filter most of the water out from the diesel. A problem with filters of this kind is that part of the diesel is also filtered out and is led to a container for storage together with the water, which container is integrated with the filter. When it is desired, after a period of driving, to empty the container of water, the flow through the filter is halted for a time, whereupon a layer of diesel will stratify on the surface of the water volume because of the difference in density between water and diesel. After the stratification has taken place, the water can be evacuated via a drain device in the bottom of the container.

The filter with the container for gathering the filtered-out water and the diesel filtered out with the water is arranged either on the outside of the engine or on the outside of the fuel tank or on a fuel line which extends between the fuel tank and the engine.

A disadvantage of a filter with a gathering container is that it is very sensitive to cold weather when it contains a large proportion of water.

Generic US 2005/0121374 describes a fuel tank for storage of vehicle fuel comprising means for water separation arranged within the fuel tank.

### Brief description of the invention

The problem of the gathering container being sensitive to cold weather when it contains a large proportion of water is solved according to the invention by a fuel tank according to the characterising part of claim 1.

A fuel tank according to claim 1 having the characteristic that a gathering container for water separated from diesel is arranged within the fuel tank affords the advantage that the gathering container will be less sensitive to cold weather, while at the same time not occupying any further space on the vehicle's chassis. Moreover, a gathering container placed within the fuel tank may be of any desired configuration without being limited by that of devices fitted to the chassis. The gathering container according to the invention will also be easy to empty in that it may be situated close to the vehicle's side surface and hence be accessible either from the side of the vehicle or from the underside of the vehicle. A further advantage of a gathering container separated from the filter is that a larger volume of water can be accumulated before the gathering container needs to be emptied of water.

### Brief description of the drawings

The invention is explained in more detail below with reference to the attached drawings, in which:
Figure 1 depicts schematically a cross-section of a fuel tank according to an embodiment of the invention, and
Figure 2 depicts a schematic configuration of a fuel system of a vehicle.

### Description of preferred embodiment

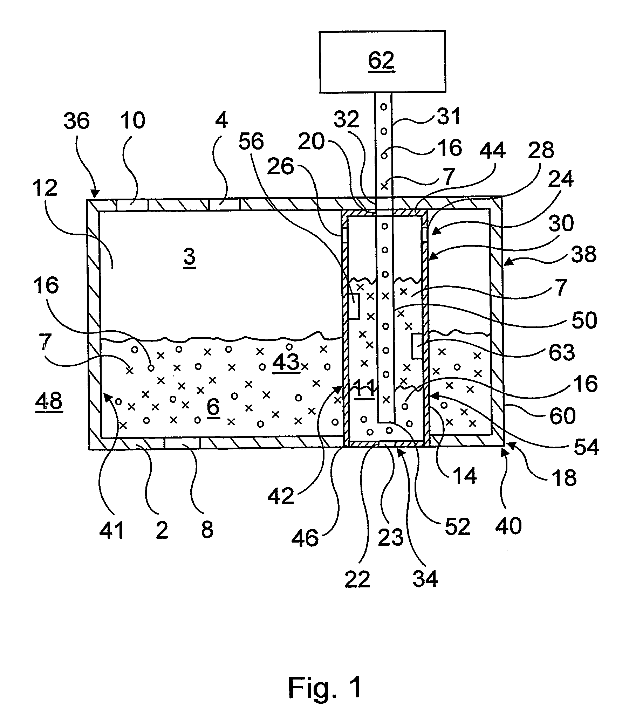

Figure 1 depicts schematically a cross-section of a fuel tank 2 according to an embodiment of the invention, which fuel tank 2 comprises a filling aperture 4 for fuel 6 and a drain aperture 8 for fuel 6. The fuel tank 2 preferably further comprises a venting aperture 10 for gases 12 which accumulate in the gas volume 3 of the fuel tank 2. According to the invention, a gathering container 14 for water 16 separated from diesel 7 is also arranged on the inside of the outer delineating surface 18 of the fuel tank 2, i.e. within the fuel tank 2. The gathering container 14 comprises at least one filling aperture 20 and at least one drain aperture 22, which drain aperture 22 is preferably situated at a location lower than the filling aperture 20 as viewed in a vertical direction.

The gathering container 14 further comprises at least one overflow protection 24 in the form of at least one aperture 26, 28 situated in the upper portion 30 of the gathering container 14 as viewed in a vertical direction, whereby the contents of the gathering container 14 can run over down into the fuel tank 2. The fuel tank 2 further comprises an inlet aperture 32 through which a flow of a mixture of water 16 and diesel 7 separated by a filter 62 is intended to be able to pass into the gathering container 14, and also an outlet aperture 34 through which a flow of water 16 is intended to be able to pass out from the gathering container 14. Said inlet aperture 32 is preferably situated on the upper side 36 or the side surface 38 of the fuel tank 2, and said outlet aperture 34 is preferably situated on the side surface 38 or the underside 40 of the fuel tank. A line 31 from a filter 62 is preferably connected to the inlet aperture 32 and adapted to leading water 16 and diesel 7 separated by the filter 62 to the gathering container 14. A closure in the form of a drain plug 23 arranged in the drain aperture 22 of the gathering container 14 is preferably situated in the region of the outlet aperture 34 in the fuel tank 2.

The gathering container 14 may for example be provided with a cylindrical outer delineating surface 42, e.g. in the form of a vertical tube situated within the fuel tank 2 and having a filling aperture 20 at its upper end 44 and a drain aperture 22 at its lower end 46. Such a cylindrical tubular structure can easily be fitted in a fuel tank 2 by drilling in the bottom, or alternatively in the top, of the fuel tank 2 a hole through which the structure can be introduced into the fuel tank 2, after which it can be fixed mechanically to the fuel tank 2 by, for example, threaded or welded connections. Other forms of gathering container 14 are also conceivable, e.g. the outer delineating surface of the gathering container 14 may be spherical or take the form of a straight block or a half cylinder or some other shape.

The gathering container 14 is preferably arranged with its outer delineating surface 42 substantially separate from the inner delineating surface 41 of the fuel tank 2 so that the gathering container 14 is isolated from the inner delineating surface 41 of the fuel tank 2 and from the atmosphere 48 surrounding the fuel tank 2 by a fuel stock 43 which reduces the influence of cold weather on a gathering container 14 which contains a large proportion of water 16, but may alternatively be arranged within the fuel tank 2 and utilise some of the inner delineating surfaces 41 of the fuel tank 2, e.g. the fuel tank's sidewall 38, as part of the outer delineating surface 42 of the gathering container 14, so that the gathering container 14 and the fuel tank 2 utilise one and the same surface as their outer delineating surface.

To cause the largest possible amount of water in the water/fuel mixture flowing into the gathering container 14 to remain in the gathering container 14, a filling pipe 50 is preferably intended for water 16 and diesel 7 separated by the filter 62 and has an outlet aperture 52 which leads into the lower portion 54 of the gathering container 14 arranged in a vertical direction relative to the fuel tank 2, which filling pipe 50 is connected directly or indirectly, e.g. via channels formed by recesses 20, 32 in the walls of the gathering container 14 and the fuel tank 2 respectively, to the line 31 adapted to leading water 16 and diesel 7 separated by the filter 62 to the gathering container 14, whereupon water 16 and diesel 7 more easily become stratified in the gathering container 14, since the liquid 11 in the gathering container is subject to less turbulence, and diesel 7 primarily runs over out via the overflow protection 24 in the form of at least one aperture 26, 28 situated in the upper portion 30 of the gathering container 14 as viewed in a vertical direction.

The separation of water 16 and some diesel 7 in the suction filter 62 is preferably effected by a pressure filter provided with a venturi which draws the water 16 and diesel 7 separated in the suction filter 62 into the gathering container 14 as a result of the provision in the gathering container 14 of an inlet 63 to the venturi of the pressure filter. The venturi of the pressure filter is preferably driven by diesel which flows from a pump to the pressure filter and which proceeds therefrom to an engine.

The gathering container 14 may further be provided with a water level sensor 56 for registering the water level 58 in the gathering container 14. In the case of vehicles in which fuel tanks 2 of different volumes may be fitted, e.g. depending on customer wishes, the gathering container 14 may be arranged at a certain distance from, for example, the forward sidewall 60 of the fuel tank 2, e.g. by the gathering container 14 being fitted on the inside of said sidewall 60 with the inlet aperture 32 in said sidewall 60, so that the same length of pipeline to the inlet aperture 32 in the fuel tank 2, through which inlet aperture 32 a water/fuel flow can pass into the gathering container 14, can be utilised irrespective of the volume of the fuel tank 2.

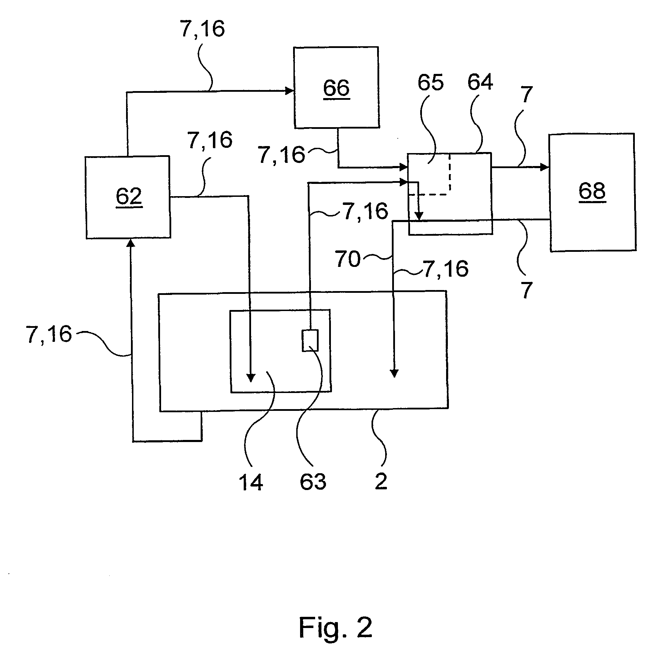

Figure 2 depicts a schematic configuration of a fuel system of a vehicle. It shows a fuel tank 2, a gathering container 14, a suction filter 62, a pressure filter 64, a pump 66 and an engine 68. A mixture of diesel 7 and water 16 flows to the suction filter 62 in which water 16 and some diesel 7 are separated to a gathering container 14 arranged on the inside of a fuel tank 2. Diesel 7 and possibly some water 16 flow on from the suction filter 62 to a pump 66, after which the flow is led to a pressure filter 64 in which any remaining water 16 and some diesel 7 are separated to the fuel tank 2, after which the flow of diesel 7 is led on to the vehicle's engine 68, from which some diesel 7 may be led back to the fuel tank 2 via the pressure filter 64 and a return line 70. The separate of water 16 and some diesel 7 in the suction filter 62 is preferably effected by the pressure filter 64 being provided with a venturi 65 which draws water 16 and diesel 7 separated in the suction filter 62 into the gathering container 14 as a result of the latter being provided with an inlet 63 to the venturi 65 of the pressure filter 64. The pressure filter's venturi 65 is preferably driven by diesel 7 which flows from the pump 66 to the pressure filter 64 and which proceeds therefrom to the engine 68. Diesel 7 and water 16 which are drawn in through the inlet 63 are led back to the fuel tank 2 via the return line 70.

## Claims

1. A fuel tank comprising a filling aperture (4) for fuel (6) and a drain aperture (8) for fuel (6), comprising a gathering container (14) for water (16) separated from diesel (7) is arranged within the fuel tank (2), the gathering container (14) comprises at least one filling aperture (20), and the fuel tank (2) comprises an inlet aperture (32) through which a flow of a mixture of water (16) and diesel (7) separated by a filter (62) is intended to be able to pass into the gathering container (14), **characterised in that** the gathering container (14) comprises at least one drain aperture (22), and an outlet aperture (34) through which a flow of water (16) is intended to be able to pass out from the gathering container (14), and a closure in the form of a drain plug (23) is arranged in the drain aperture (22) of the gathering container (14) is provided in the region of the outlet aperture (34) in the fuel tank (2), further a filling pipe (50) intended for water (16) and diesel (7) separated by the filter (62), with an outlet aperture (52) leading into the lower portion (54) of the gathering container (14) as viewed in a vertical direction, is provided at the fuel tank (2), which filling pipe (50) is connected to the line (31) adapted to leading water (16) and diesel (7) separated by the filter (62) to the gathering container (14), which water (16) and diesel (7) more easily become stratified in the gathering container (14), since the liquid (11) in the gathering container (14) is subject to less turbulence, resulting in diesel (7) primarily overflowing out via the overflow protection (24).

2. A fuel tank according to claim 1, **characterised in that** the gathering container (14) comprises at least one overflow protection (24) in the form of at least one aperture (26, 28) situated in the upper portion (30) of the gathering container (14) as viewed in a vertical direction, whereby the contents of the gathering container (14) are intended to be able to overflow down into the fuel tank (2).

3. A fuel tank according to claim 1 or 2, **characterised in that** a line (31) from a filter (62) is connected to the inlet aperture (32) in the fuel tank (2) and is adapted to leading water (16) and diesel (7) separated by the filter (62) to the gathering container (14).

4. A fuel tank according to any one of the foregoing claims, **characterised in that** the gathering container (14) is arranged with its outer delineating surface (42) substantially separate from the inner delineating surface (41) of the fuel tank so that the gathering container (14) is isolated from the inner delineating surface (41) of the fuel tank (2) and from the atmosphere (48) surrounding the fuel tank (2) by a fuel stock (43) which reduces the influence of cold weather on a gathering container (14) which contains a large proportion of water (16).

5. A fuel tank according to any one of the foregoing claims, **characterised in that** the gathering container (14) is provided with a cylindrical outer delineating surface (42).

6. A fuel tank according to any one of the foregoing claims, **characterised in that** the fuel tank (2) comprise a venting aperture (10) for gases (12) which accumulate in the gas volume (3) of the fuel tank (2).

7. A fuel tank according to any one of the foregoing claims, **characterised in that** the inlet aperture (32) of the fuel tank (2) is situated on the upper side (36) or the side surface (38) of the fuel tank (2), and that the outlet aperture (34) of the fuel tank (2) is situated on the side surface (38) or the underside (40) of the fuel tank (2).

8. A fuel tank according to any one of the foregoing claims, **characterised in that** the drain aperture (22) of the gathering container (14) is situated at a location lower than the filling aperture (20) of the gathering container (14) as viewed in a vertical direction.

## Patentansprüche

1. Kraftstoffbehälter mit einer Einfüllöffnung (4) für Kraftstoff (6) und einer Ablauföffnung (8) für Kraftstoff (6), wobei der Kraftstoffbehälter einen Sammelbehälter (14) aufweist für von Diesel (7) abgetrenntes Wasser (16), der in dem Kraftstoffbehälter (2) enthalten ist, wobei der Sammelbehälter (14) zumindest eine Einfüllöffnung (20) aufweist, und der Kraftstoffbehälter (2) eine Eintrittsöffnung (32) umfasst, durch die ein Durchfluss eines Gemisches aus Wasser (16) und Diesel (7) durch einen Filter (62) in den Sammelbehälter (14) einfließen kann,
**dadurch gekennzeichnet, dass** der Sammelbehälter (14) zumindest eine Ablauföffnung (22) und eine Austrittsöffnung (34) aufweist, durch die ein Wasserstrom (16) aus dem Sammelbehälter (14) herausfließen kann, und einen Verschluss in Form eines Ablaufstopfens (23) aufweist, der in der Ablauföffnung (22) des Sammelbehälters (14) angeordnet ist und in dem Bereich der Austrittsöffnung (34) im Kraftstoffbehälter (2) vorgesehen ist, wobei ferner ein Füllrohr (50) an dem Kraftstoffbehälter (2) angeordnet ist, das für Wasser (16) und Diesel (7) vorgesehen ist, die durch den Filter (62) getrennt wurden, und eine Austrittsöffnung (52) aufweist, die, in vertikaler Richtung betrachtet, in den unteren Bereich (54) des Sammelbehälters (14) führt, wobei das Füllrohr (50) mit der Leitung (31) verbunden ist, die dazu ausgebildet ist, Wasser (16) und Diesel (7) separiert durch den Filter (62) zu dem Sammelbehälter (14) zu führen, wobei Wasser (16) und Diesel (7) leichter in dem Sammelbehälter (14) geschichtet werden, da die Flüssigkeit (11) im Sammelbehälter (14) weniger Turbulenzen ausgesetzt ist, was hauptsächlich zum Herauslaufen des Diesels (7) über den Überlaufschutz (24) führt.

2. Kraftstoffbehälter nach Anspruch 1,
**dadurch gekennzeichnet, dass** der Sammelbehälter (14) zumindest einen Überlaufschutz (24) aufweist in Form von zumindest einer Öffnung (26, 28), die, in vertikaler Richtung betrachtet, im oberen Bereich (30) des Sammelbehälters (14) angeordnet ist, wobei die Inhalte des Sammelbehälters (14) hinunter in den Kraftstoffbehälter (2) überströmen können.

3. Kraftstoffbehälter nach Anspruch 1 oder 2,
**dadurch gekennzeichnet, dass** die Leitung (31) von einem Filter (62) mit der Eintrittsöffnung (32) des Kraftstoffbehälters (2) verbunden ist und dazu geeignet ist, durch den Filter (62) getrenntes Wasser (16) und Diesel (7) durch den Filter (62) zu dem Sammelbehälter (14) zu führen.

4. Kraftstoffbehälter nach einem der vorangehenden Ansprüche,
**dadurch gekennzeichnet, dass** der Sammelbehälter (14) mit seiner äußeren Abgrenzungsfläche (42) im Wesentlichen von der inneren Abgrenzungsfläche (41) des Kraftstoffbehälters getrennt ist, so dass der Sammelbehälter (14) von der inneren Abgrenzungsfläche (41) des Kraftstoffbehälters (2) und von der Atmosphäre (48), die den Kraftstoffbehälter (2) umgibt, abgetrennt ist durch die Kraftstoffeinlagerung (43), die den Einfluss von kaltem Wetter auf einen Sammelbehälter (14) reduziert, der einen großen Anteil an Wasser (16) aufweist.

5. Kraftstoffbehälter nach einem der vorangehenden Ansprüche,
**dadurch gekennzeichnet, dass** der Sammelbehälter (14) eine zylindrische, äußere Abgrenzungsfläche (42) aufweist.

6. Kraftstoffbehälter nach einem der vorangehenden Ansprüche,
**dadurch gekennzeichnet, dass** der Kraftstofftank (2) eine Entlüftungsöffnung (10) für Gase (12) aufweist, die in dem Gasraum (3) des Kraftstoffbehälters (2) anfallen.

7. Kraftstoffbehälter nach einem der vorangehenden Ansprüche,
**dadurch gekennzeichnet, dass** die Eintrittsöffnung (32) des Kraftstoffbehälters (2) an der Oberseite (36) oder an der Seitenfläche (38) des Kraftstoffbehälters (2) angeordnet ist, und dass die Austrittsöffnung (34) des Kraftstoffbehälters (2) an der Seitenfläche (38) oder der Unterseite (40) des Kraftstoffbehälters (2) angeordnet ist.

8. Kraftstoffbehälter nach einem der vorangehenden Ansprüche,
**dadurch gekennzeichnet, dass** die Ablauföffnung (22) des Sammelbehälters (14), in vertikaler Richtung betrachtet, in einem Bereich unterhalb der Einfüllöffnung (20) des Sammelbehälters (14) angeordnet ist.

## Revendications

1. Réservoir de carburant, comprenant une ouverture de remplissage (4) pour un carburant (6) et une ouverture de drain (8) pour un carburant (6), comprenant un récipient de collecte (14) pour de l'eau (16) séparée d'un carburant diesel (7), qui est disposé à l'intérieur du réservoir de carburant (2), le récipient de collecte (14) comprenant au moins une ouverture de remplissage (20), et le réservoir de carburant (2) comprenant une ouverture d'entrée (32) à travers laquelle il est prévu qu'un écoulement d'un mélange d'eau (16) et de carburant diesel (7) séparés par un filtre (62) soit susceptible de passer vers l'intérieur du récipient de collecte (14), **caractérisé en ce que** le récipient de collecte (14) comprend au moins une ouverture de drain (22), et une ouverture de sortie (34) à travers laquelle il est prévu qu'un écoulement d'eau (16) soit susceptible de passer vers l'extérieur à partir du récipient de collecte (14), et **en ce qu'**une fermeture sous la forme d'un bouchon de drain (23) qui est disposé dans l'ouverture de drain (22) du récipient de collecte (14) est disposée dans la région de l'ouverture de sortie (34) dans le réservoir de carburant (2), et **en ce que**, de plus, un tuyau de remplissage (50) conçu pour de l'eau (16) et du carburant diesel (7) séparés par le filtre (62), avec une ouverture de sortie (52) menant dans la partie inférieure (54) du récipient de collecte (14), vu dans une direction verticale, est disposé dans le réservoir de carburant (2), ce tuyau de remplissage (50) étant relié à la ligne (31) adaptée pour acheminer de l'eau (16) et du carburant diesel (7) séparés par le filtre (62) vers le récipient de collecte (14), cette eau (16) et ce carburant diesel (7) devenant plus facilement stratifiés dans le récipient de collecte (14), car le liquide (11) dans le récipient de collecte (14) est soumis à une moindre turbulence, ce qui produit en résultat un débordement principalement du carburant diesel (7) vers l'extérieur par la protection de trop-plein (24).

2. Réservoir de carburant selon la revendication 1, **caractérisé en ce que** le récipient de collecte (14) comprend au moins une protection de trop-plein (24) sous la forme d'au moins une ouverture (26, 28) située dans la partie supérieure (30) du récipient de collecte (14), vu dans une direction verticale, grâce à quoi il est prévu que le contenu du récipient de collecte (14) soit susceptible de déborder vers le bas dans le réservoir de carburant (2).

3. Réservoir de carburant selon la revendication 1 ou 2, **caractérisé en ce qu'**une ligne (31) venant d'un filtre (62) est reliée à l'ouverture d'entrée (32) dans le réservoir de carburant (2) et est adaptée de façon à acheminer de l'eau (16) et du carburant diesel (7) séparés par le filtre (62) vers le récipient de collecte (14).

4. Réservoir de carburant selon l'une quelconque des revendications précédentes, **caractérisé en ce que** le récipient de collecte (14) est configuré avec sa surface de délimitation extérieure (42) sensiblement séparée de la surface de délimitation intérieure (41) du réservoir de carburant, de telle sorte que le récipient de collecte (14) soit isolé de la surface de délimitation intérieure (41) du réservoir de carburant (2) et de l'atmosphère (48) entourant le réservoir de carburant (2) par une masse de carburant (43), ce qui réduit l'influence d'un temps froid sur un récipient de collecte (14) qui contient une forte proportion d'eau (16).

5. Réservoir de carburant selon l'une quelconque des revendications précédentes, **caractérisé en ce que** le récipient de collecte (14) est muni d'une surface de délimitation extérieure cylindrique (42).

6. Réservoir de carburant selon l'une quelconque des revendications précédentes, **caractérisé en ce que** le réservoir de carburant (2) comprend une ouverture d'évacuation (10) pour des gaz (12) qui s'accumulent dans le volume de gaz (3) du réservoir de carburant (2).

7. Réservoir de carburant selon l'une quelconque des revendications précédentes, **caractérisé en ce que** l'ouverture d'entrée (32) du réservoir de carburant (2) est située sur le côté supérieur (36) ou sur la surface latérale (38) du réservoir de carburant (2), et **en ce que** l'ouverture de sortie (34) du réservoir de carburant (2) est située sur la surface latérale (38) ou sur la surface inférieure (40) du réservoir de carburant (2).

8. Réservoir de carburant l'une quelconque des revendications précédentes, **caractérisé en ce que** l'ouverture de drain (22) du récipient de collecte (14) est située en un emplacement plus bas que l'ouverture de remplissage (20) du récipient de collecte (14), vu dans une direction verticale.
